(19) Europäisches Patentamt / European Patent Office / Office européen des brevets

(11) **EP 4 470 649 A1**

(12) **EUROPEAN PATENT APPLICATION**
published in accordance with Art. 153(4) EPC

(43) Date of publication:
**04.12.2024 Bulletin 2024/49**

(21) Application number: **22924210.2**

(22) Date of filing: **26.12.2022**

(51) International Patent Classification (IPC):
**B01D 35/14** (2006.01)   **B01D 29/11** (2006.01)

(52) Cooperative Patent Classification (CPC):
**B01D 29/11; B01D 35/14**

(86) International application number:
**PCT/JP2022/047970**

(87) International publication number:
**WO 2023/145363 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2022 JP 2022011234**

(71) Applicant: **YAMASHIN-FILTER CORP.**
**Yokohama-shi, Kanagawa 231-0062 (JP)**

(72) Inventors:
• **OKAMOTO Naohiro**
**Yokosuka-shi, Kanagawa 239-0847 (JP)**
• **KITAJIMA Nobuyuki**
**Yokosuka-shi, Kanagawa 239-0847 (JP)**

(74) Representative: **Hasegawa, Kan**
**Patentanwaltskanzlei Hasegawa**
**Untere Hauptstraße 56**
**85354 Freising (DE)**

(54) **FILTER DEVICE**

(57)     A filter element can be positioned in the circumferential direction, even when the positioning cannot be performed at the time of insertion of the filter element. An upper plate of the filter element includes a first rotation stop portion on an upper surface that faces a head, the head includes a second rotation stop portion on a lower surface that faces the upper plate, and one of the first rotation stop portion and the second rotation stop portion is a protruding portion and another one of the first rotation stop portion and the second rotation stop portion is a recessed portion and a protrusion. The protrusion is provided along a wall surface at part of the recessed portion, to protrude in a direction opposite to a depth direction of the recessed portion. In response to rotation of the case or the head and screwing of the first thread portion and the second thread portion, the filter element rotates when the protruding portion is not in contact with the protrusion, and does not rotate when the protruding portion is in contact with the protrusion. In a state where the case and the head are assembled, the protruding portion is inserted in the recessed portion.

FIG. 2

## Description

Technical Field

The present invention relates to a filter device.

Background Art

Patent Document 1 discloses a filter device in which an IC tag is provided inside an upper plate provided so as to cover an upper end face of a filtration member in a filter element. An antenna is provided on a lid body attached to a case into which the filter element is inserted.

Citation List

Patent Literature

Patent Document 1: JP 2019-115879 A

Summary of Invention

Technical Problem

According to the invention described in Patent Document 1, the upper plate has a protruding portion, and the lid body has a protrusion formed for positioning the protruding portion in the circumferential direction. Unfortunately, the invention described in Patent Document 1 has a configuration specific to a return filter in which the protruding portion and the protrusion are visible when the filter element is inserted into the case to which the lid body is attached, that is, at the time of insertion of the filter element. This configuration is not applicable to a capsule filter or the like in which the filter element is inserted first.

The present invention is made in view of the above circumstances, and an object of the present invention is to provide a filter device in which a filter element can be positioned in the circumferential direction, even when the positioning cannot be performed at the time of insertion of the filter element.

Solution to Problem

For example, a filter device according to the present invention to solve the problem described above includes: a case that has a bottomed substantially tubular shape, has an upper end provided with an opening, and has a first thread portion formed near the opening; a filter element that is provided in the case to be rotatable with respect to the case, and includes a cylindrical filtration section, and an upper plate provided at an upper end of the filtration section; and a head that includes a second thread portion capable of being screwed to the first thread portion, and is provided to the case, to cover the upper end of the case when the second thread portion and the first thread portion are screwed, wherein the upper plate includes a first rotation stop portion on an upper surface that faces the head, the head includes a second rotation stop portion on a lower surface that faces the upper plate, one of the first rotation stop portion and the second rotation stop portion is a protruding portion and another one of the first rotation stop portion and the second rotation stop portion is a recessed portion and a protrusion, the protrusion is provided along a wall surface at part of the recessed portion, to protrude in a direction opposite to a depth direction of the recessed portion, in response to rotation of the case or the head and screwing of the first thread portion and the second thread portion, the filter element rotates when the protruding portion is not in contact with the protrusion, and does not rotate when the protruding portion is in contact with the protrusion, and in a state where the case and the head are assembled, the protruding portion is inserted in the recessed portion.

In the filter device according to the present invention, the upper plate of the filter element includes the first rotation stop portion on the upper surface that faces the head, and the head includes the second rotation stop portion on the lower surface that faces the upper plate. One of the first rotation stop portion and the second rotation stop portion is the protruding portion and another one of the first rotation stop portion and the second rotation stop portion is the recessed portion and the protrusion that protrudes in the direction opposite to the depth direction of the recessed portion along the wall surface of part of the recessed portion. In response to rotation of the case or the head and screwing of the first thread portion and the second thread portion, the filter element rotates when the protruding portion is not in contact with the protrusion, and does not rotate when the protruding portion is in contact with the protrusion, and in a state where the case and the head are assembled, the protruding portion is inserted in the recessed portion. With this configuration, a filter element can be positioned in the circumferential direction, even when the positioning cannot be performed at the time of insertion of the filter element.

A protrusion amount of the protrusion may be equal to or larger than a pitch of the first thread portion and the second thread portion. Thus, the protruding portion can be brought into contact with the protrusion first.

The first rotation stop portion may be the protruding portion and protrude toward the head, the second rotation stop portion may be the recessed portion and the protrusion, as viewed along a central axis of the filter element and the case, a first direction that is a longitudinal direction of the protruding portion may extend along a line orthogonal to a line in a radial direction passing through a center in the first direction, or along a circle centered on the central axis and passing through the center in the first direction, and an upper end face of the protruding portion may be inclined to be lower toward an end in the first direction. With this configuration, defects such as damaging of the filter element inside the case can be prevented.

The protruding portion may be provided at a position overlapping the filtration section. This configuration facilitates transmission of the force for rotating the case to the first rotation stop portion and the second rotation stop portion.

The first rotation stop portion may be the recessed portion and the protrusion, the second rotation stop portion may be the protruding portion and protrude toward the upper plate, as viewed along a central axis of the filter element and the case, a second direction that is a longitudinal direction of the protrusion may extend along a line orthogonal to a line in a radial direction passing through a center in the second direction, or along a circle centered on the central axis and passing through the center in the second direction, and an upper end face of the protrusion may be inclined to be lower toward an end in the second direction. With this configuration, defects such as damaging of the filter element inside the case can be prevented.

An inclination angle of the upper end face may be equal to or larger than a lead angle of the first thread portion and the second thread portion. Thus, the protruding portion can be brought into contact with the protrusion first.

The protruding portion may be provided with an IC tag, and the head may be provided with an antenna adjacent to the recessed portion. With this configuration, the IC tag and the antenna can be disposed close to each other.

Advantageous Effects of Invention

With the present invention, a filter element can be positioned in the circumferential direction, even when the positioning cannot be performed at the time of insertion of the filter element.

Brief Description of Drawings

FIG. 1 is diagram schematically illustrating a filter device 1, in which (A) is a perspective view, (B) is a front view, and (C) is a plan view.
FIG. 2 is a cross-sectional perspective view of the filter device 1 taken along line A-A in FIG. 1(C).
FIG. 3 is a cross-sectional view of the filter device 1 taken along line A-A in FIG. 1(C).
FIG. 4 is a cross-sectional view of the filter device 1 taken along line B-B in FIG. 1(B).
FIG. 5 is a diagram schematically illustrating an upper plate 23, in which (A) is a perspective view, (B) is a plan view, and (C) is a right side view.
FIG. 6 is a perspective view schematically illustrating a head 30 as viewed from a -z side.
FIG. 7 is a diagram schematically illustrating the head 30, in which (A) is a cross-sectional perspective view, and (B) is a cross-sectional view.
FIG. 8 is a diagram schematically illustrating how the case 10 and a filter element 20 are attached to the head 30.
FIG. 9 is a diagram schematically illustrating how the case 10 and the filter element 20 are attached to the head 30.
FIG. 10 is a diagram schematically illustrating a filter device 2, in which (A) is a perspective view, and (B) is a right side view.
FIG. 11 is a perspective view of the filter device 2 taken along a plane parallel to an xz plane including a central axis ax.
FIG. 12 is a diagram as viewed in a direction indicated by an arrow D in FIG. 11.
FIG. 13 is a cross-sectional view taken along line C-C in FIG. 10(B).
FIG. 14 is a diagram schematically illustrating an upper plate 23A, in which (A) is a perspective view and (B) is a cross-sectional view.
FIG. 15 is a diagram schematically illustrating a head 30A, in which (A) is a cross-sectional perspective view, and (B) is a cross-sectional view.
FIG. 16 is diagram schematically illustrating a filter device 3 that is an embodiment of the present invention, in which (A) is a perspective view, (B) is a right side view, and (C) is a cross-sectional view taken along line E-E in (B).
FIG. 17 is a perspective view of the filter device 3 taken along a plane parallel to the xz plane including a central axis ax.
FIG. 18 is a diagram as viewed in a direction indicated by an arrow G in FIG. 17.
FIG. 19 is a cross-sectional view taken along line F-F in FIG. 16(B).
FIG. 20 is a diagram schematically illustrating an upper plate 23B, in which (A) is a perspective view, (B) is a cross-sectional view on a plane H in (A), and (C) illustrates the object in (B) as viewed in a direction indicated by an arrow I.
FIG. 21 is a perspective view schematically illustrating a head 30B as viewed from a -z side.
FIG. 22 is a diagram schematically illustrating a head 30B, in which (A) is a cross-sectional perspective view, and (B) is a cross-sectional view.

Description of Embodiments

Hereinafter, embodiments of the present invention will be described in detail with reference to the drawings. In the present embodiment, while oil is described as an example of liquid to be filtered, the liquid to be filtered is not limited to the oil. Also, while a capsule filter is described as an example in the present embodiment, a filter device of the present invention is not limited to the capsule filter.

First Embodiment

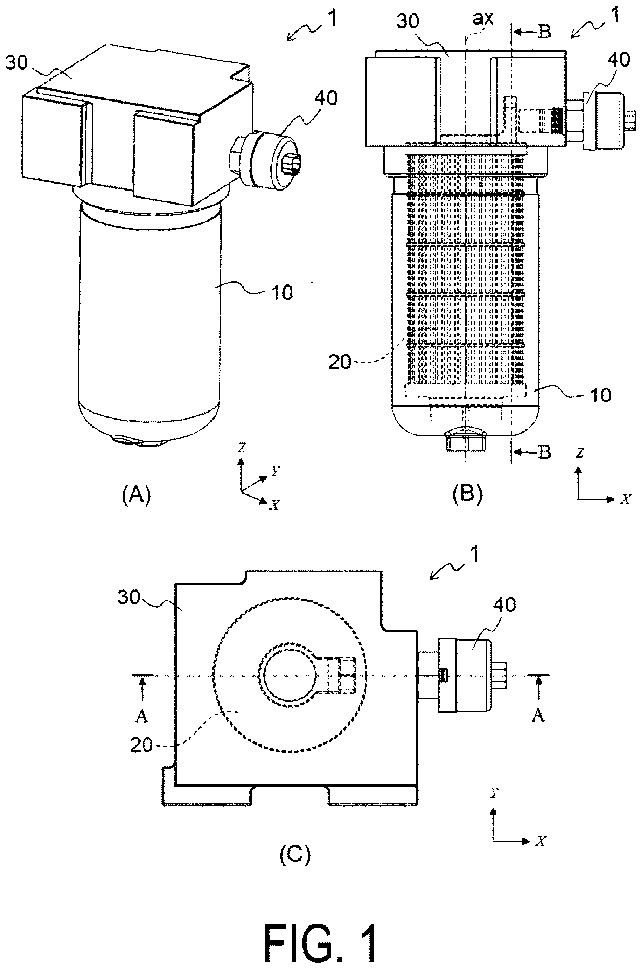

FIG. 1 is diagram schematically illustrating a filter device 1 that is an embodiment of the present invention, in which (A) is a perspective view, (B) is a front view, and (C) is a plan view. Hereinafter, an extending direction of the filter device 1 (an extending direction of a central axis ax of the filter device 1) is referred to as a z direction, and directions orthogonal to the z direction are referred to as an x direction and a y direction. The x direction and the y direction are orthogonal to each other. Generally, the z direction is a vertical direction, but is not limited thereto.

The filter device 1 mainly includes a case 10, a filter element 20, and a head 30. In a state where the case 10 is attached to the head 30, the filter element 20 is provided to the case 10 and the head 30. The head 30 is provided with an insertion member 40.

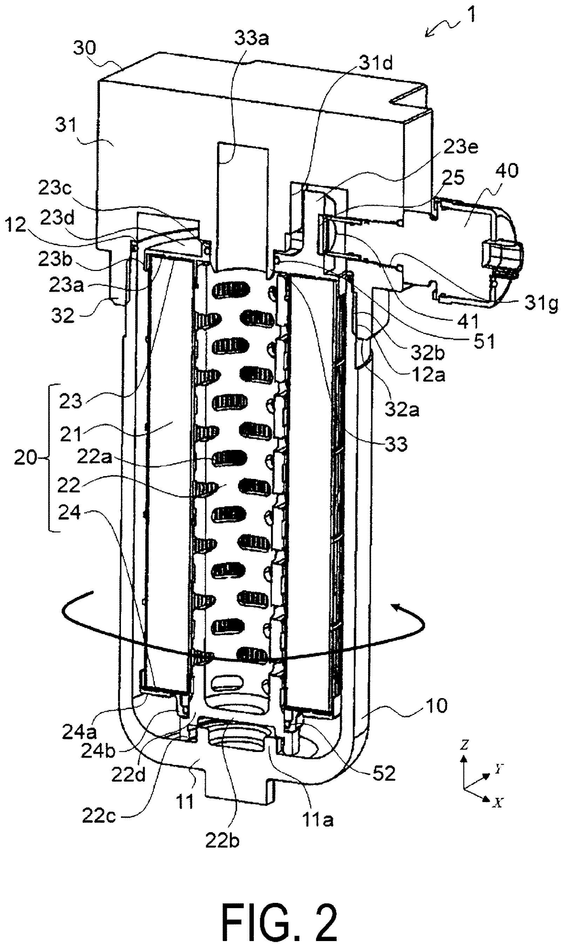

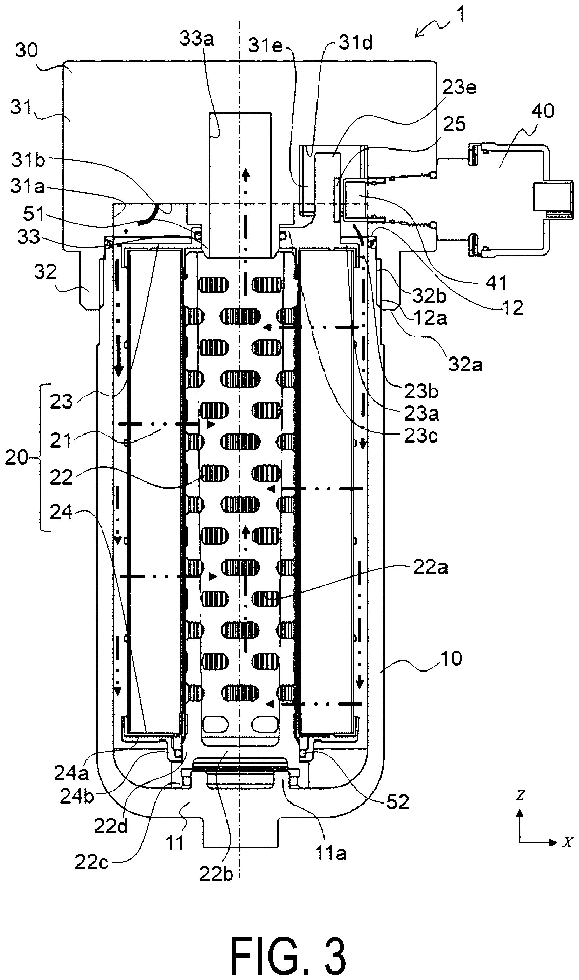

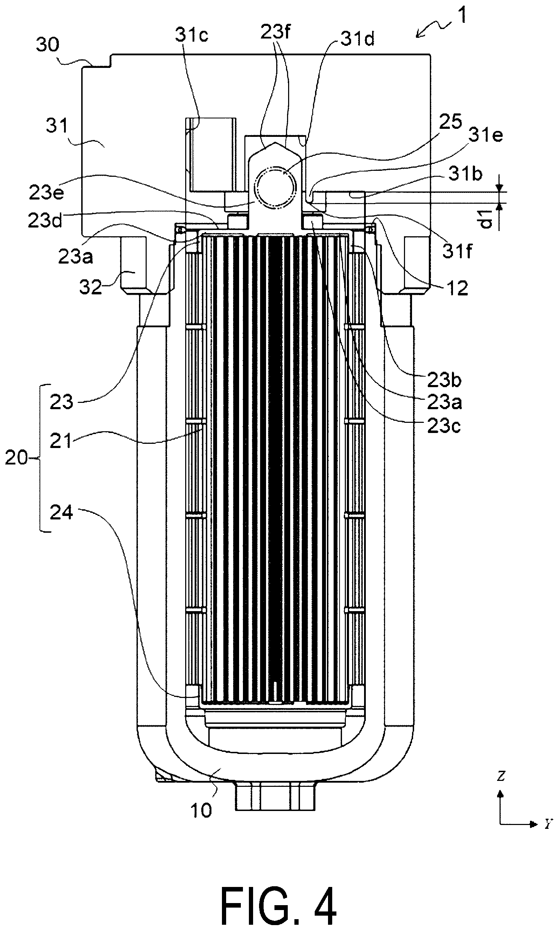

FIG. 2 is a perspective view taken along line A-A in FIG. 1(C), and FIG. 3 is a cross-sectional view taken along line A-A in FIG. 1(C). FIG. 4 is a cross-sectional view taken along line B-B in FIG. 1(B). In FIG. 2 to FIG. 4, hatching for indicating a cross section is omitted. The dash-dotted line arrows in FIG. 3 indicate a flow of the oil.

The case 10 is formed of a material having high corrosion resistance (for example, metal such as stainless steel) to have a bottomed substantially tubular shape. The case 10 has an open upper end and a hollow interior. The filter element 20 is provided inside the case 10.

The case 10 has a bottom surface 11. The bottom surface 11 is provided with a plurality of cylindrical protruding portions 11a. The filter element 20 is rotatably provided to the protruding portions 11a (described in detail below).

The case 10 has an upper end provided with a wide opening portion 12 in which a thread portion 12a (corresponding to first thread portion of the present invention) is formed. In the present embodiment, the thread portion 12a is a male thread formed on the outer circumference of the opening portion 12.

The filter element 20 is a member having a bottomed substantially tubular shape and provided inside the case 10. The filter element 20 mainly includes a filtration section 21, an inner tube 22, an upper plate 23, and a lower plate 24.

The filtration section 21 is a member having a substantially cylindrical shape and having openings at both ends. The filtration section 21 is, for example, formed by pleating a filter paper using, for example, synthetic resin, paper, or the like and connecting both ends of the pleated filter paper to form a cylindrical shape.

The filtration section 21 has an upper side end provided with the upper plate 23, and a lower side end provided with the lower plate 24. The upper plate 23 and the lower plate 24 are integrated with the filtration section 21 by adhesion or the like.

The upper plate 23 mainly includes a substantially disk shaped plate-like portion 23a provided along the upper end face of the filtration section 21, a recessed portion 23b provided on the lower side of the plate-like portion 23a, a tubular portion 23c that has a tubular shape and is provided on the upper side of the plate-like portion 23a, and a plate-like protruding portion 23e (corresponding to first rotation stop portion of the present invention) provided on the upper side of the plate-like portion 23a.

The recessed portion 23b protrudes in a -z direction (downward direction) from the plate-like portion 23a. When the filtration section 21 is provided in the recessed portion 23b, the plate-like portion 23a is disposed at the upper end of the filtration section 21. The tubular portion 23c protrudes in a +z direction (upward direction) from the plate-like portion 23a. A connecting tube 33 (described in detail below) of the head 30 is inserted in the tubular portion 23c. An elastic member 51 such as an O-ring is provided between the tubular portion 23c and the connecting tube 33. Thus, no oil leakage occurs between the tubular portion 23c and the connecting tube 33.

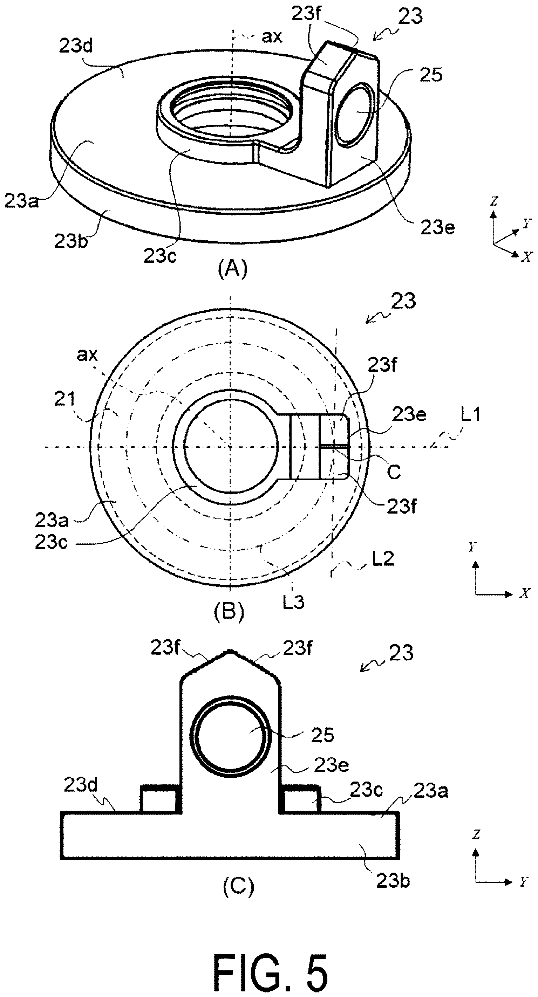

FIG. 5 is a diagram schematically illustrating an upper plate 23, in which (A) is a perspective view, (B) is a plan view (as viewed in the +z direction), and (C) is a right side view (as viewed in a +x direction). The protruding portion 23e has a plate-like shape, and is provided on an upper surface 23d facing the head 30 of the plate-like portion 23a. The protruding portion 23e protrudes toward the head 30. The protruding portion 23e is provided at a position overlapping the filtration section 21 as viewed along the central axis ax of the case 10 and the filter element 20. As viewed along the central axis ax of the case 10 and the filter element 20, the longitudinal direction of the protruding portion 23e (corresponding to first direction of the present invention) is oriented along a line L2 orthogonal to a radial direction line L1 passing through a center C of the protruding portion 23e in the longitudinal direction, that is, the y direction.

An IC tag 25 is provided along the z direction on the outer side (-x side) surface of the protruding portion 23e. While the IC tag 25 is exposed in the present embodiment, the IC tag 25 may be embedded in the protruding portion 23e.

The protruding portion 23e has an upper end face 23f inclined to be lowered toward an end in the y direction. In the present embodiment, an inclination angle of the upper end face 23f is equal to or larger than a lead angle of the thread portion 12a and a thread portion 32b (described in detail below). This lead angle $\phi$ is expressed by the following Formula (1). In the formula, I represents the pitch (lead) and d represents the effective diameter of the thread.

$$\tan \varphi = l/\pi d \ \dots \ (1)$$

The description will now return to FIG. 1 to FIG. 4. The inner tube 22 is provided on the inner side of the filtration section 21. On the side surface of the inner tube 22, a plurality of holes 22a serving as oil flow paths are formed over substantially the entire side surface. No hole is provided in a bottom surface 22b of the inner tube 22, and the oil filtered in the filtration section 21 flows in the +z direction in the inner tube 22. A tubular portion 22c protruding in the -z direction is provided more on a -z side than the bottom surface 22b of the inner tube 22. The protruding portion 11a is inserted in the tubular portion 22c. Since there is a gap between the tubular portion 22c and the protruding portion 11a, the tubular portion 22c (that is, the inner tube 22) is rotatable with respect to the protruding portion 11a (that is, the case 10).

The lower plate 24 mainly includes a recessed portion 24a into which the filtration section 21 is inserted and a tubular portion 24b having a tubular shape provided on the -z side of the recessed portion 24a. The tubular portion 24b is inserted in a tubular portion 22d provided near the bottom surface 22b of the inner tube 22. Between the tubular portion 24b and the tubular portion 22d, an elastic member 52 such as an O-ring is provided. By providing the elastic member 52, no oil leakage occurs between the tubular portion 24b and the tubular portion 22d. The elastic member 52 fixes the inner tube 22 and the lower plate 24 so that the tubular portion 24b (that is, the lower plate 24) and the tubular portion 22d (that is, the inner tube 22) do not rotate relative to each other.

The head 30 is provided to the case 10 to cover the opening portion 12 at the upper end of the case 10. The head 30 mainly includes a head body portion 31, a tubular portion 32 provided to protrude in the -z direction from a bottom surface 31j of the head body portion 31, and a connecting tube 33 provided substantially at the center of the head body portion 31 to protrude in the -z direction.

The tubular portion 32 has an opening portion 32a at the lower end. The thread portion 32b (corresponding to second thread portion of the present invention) is formed on the tubular portion 32. In the present embodiment, the thread portion 32b is a female thread formed on the outer circumference of the tubular portion 32. When the thread portion 12a and the thread portion 32b are screwed, the head 30 is provided to the case 10, and the filter element 20 is provided to the case 10 and the head 30.

In the present embodiment, the thread portion 12a is a male thread and the thread portion 32b is a female thread, but the male thread and the female thread may be swapped.

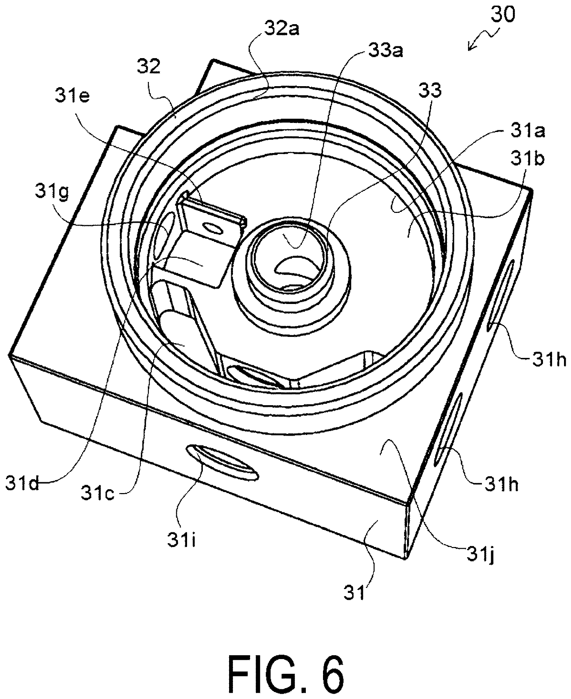

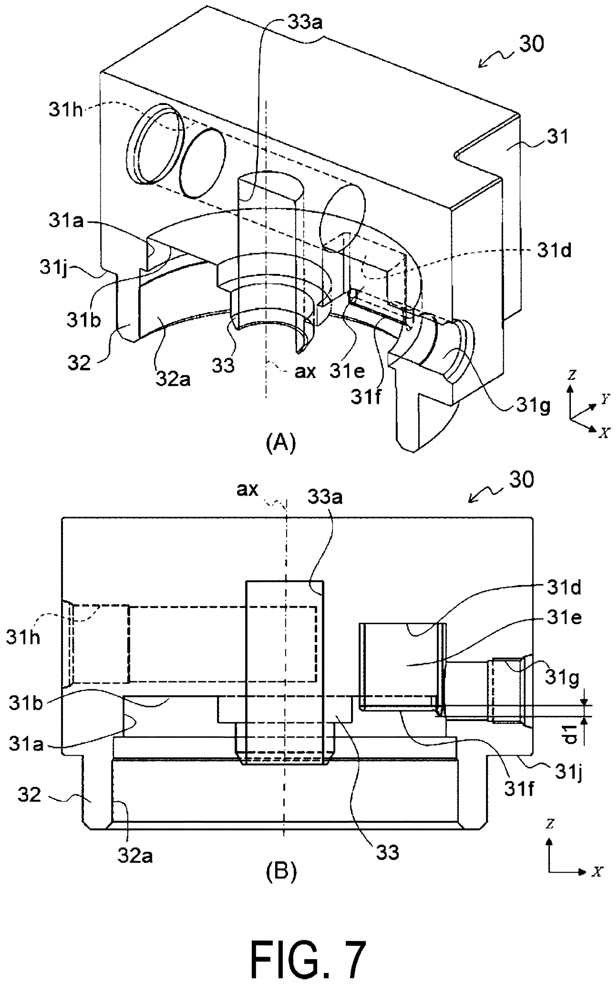

FIG. 6 is a perspective view schematically illustrating the head 30 as viewed from the -z side. FIG. 7 is a diagram schematically illustrating the head 30, in which (A) is a cross-sectional perspective view, and (B) is a cross-sectional view. In FIG. 7, hatching for indicating a cross section is omitted.

The head body portion 31 includes an inflow port 31i through which the oil flows in, and an outflow port 31h from which the oil flows out. The oil that has flowed in through the inflow port 31i flows into the case 10 through a recessed portion 31c. The outflow port 31h communicates with a hollow portion 33a of the connecting tube 33.

The head body portion 31 includes a recessed portion 31a recessed in the +z direction from the bottom surface 31j. The recessed portion 31a communicates with the hollow portion of the tubular portion 32. A bottom surface of the recessed portion 31a, that is, a lower surface 31b facing the filter element 20 (upper plate 23) is provided with a recessed portion 31d and a protrusion 31e (corresponding to second rotation stop portion of the present invention). The recessed portion 31d has a rectangular shape as viewed along the central axis ax.

The protrusion 31e is provided along a wall surface of part of the recessed portion 31d. The protrusion 31e protrudes in a direction opposite to the depth direction of the recessed portion 31d. Thus, a leading end 31f of the protrusion 31e is located more on the -z side (upper plate 23 side) than the lower surface 31b. Preferably, a height difference d1 between the leading end 31f of the protrusion 31e and the lower surface 31b (protrusion amount of the protrusion 31e) is equal to or larger than the pitch between the thread portion 12a and the thread portion 32b. The head body portion 31 has a hole 31g with one end open in the recessed portion 31d.

The description will now return to FIG. 2 to FIG. 4. In a state where the case 10 and the head 30 are assembled, the protruding portion 23e is inserted in the recessed portion 31d. The insertion member 40 provided with an antenna 41 at the leading end is inserted in the hole 31g. Therefore, when the case 10 and the head 30 are assembled and the protruding portion 23e is inserted in the recessed portion 31d, the antenna 41 and the IC tag 25 are arranged adjacent to each other (for example, at positions separated by about the 10 mm).

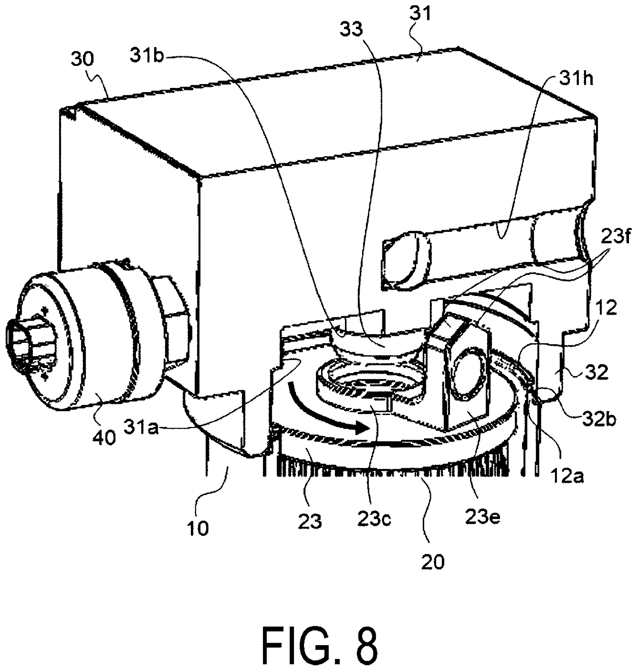

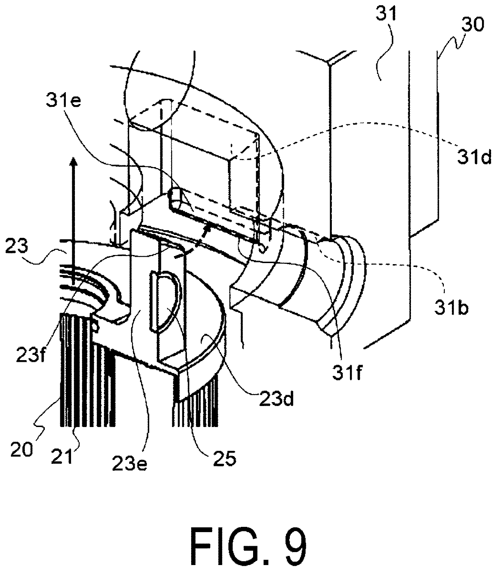

Next, functions of the filter device 1 configured as described above will be described. FIG. 8 and FIG. 9 are diagrams schematically illustrating how the case 10 and the filter element 20 are attached to the head 30. When the thread portion 12a and the thread portion 32b are screwed to each other and the case 10 or the head 30 is rotated, the case 10 and the filter element 20 are rotated clockwise (see an arrow in FIG. 8) with respect to the head 30. As illustrated in FIG. 8, in a state where the thread portion 12a and the thread portion 32b are not completely screwed, the protruding portion 23e is not in contact with the head 30. Thus, the case 10 and the filter element 20 both rotate clockwise (the filter element 20 does not rotate with respect to the case 10).

As illustrated in FIG. 9, the leading end 31f of the protrusion 31e is located more on the -z side (upper plate 23 side) than the lower surface 31b. Thus, when the case 10 and the filter element 20 are screwed into the head 30 in this state, the protruding portion 23e (upper end face 23f) comes into contact with the protrusion 31e (see the dotted arrow in FIG. 9). Since the upper end face 23f is inclined, when the case 10 and the filter element 20 are rotated with respect to the head 30, the filter element 20 rotates with respect to the case 10 while the upper end face 23f slides with respect to the protrusion 31e. Thus, defects such as damaging of the filter element 20 inside the case 10 can be prevented. Since the protruding portion 23e is provided at a position overlapping the filtration section 21 (outside in the radial direction, that is, not near the central axis ax), transmission of the force for rotating the case 10 to the protruding portion 23e is facilitated.

In the present embodiment, since the height difference d1 between the leading end 31f of the protrusion 31e and the lower surface 31b is equal to or larger than the pitch of the thread portion 12a and the thread portion 32b, the protruding portion 23e can be brought into contact with the protrusion 31e first. In addition, since the inclination angle of the upper end face 23f is equal to or larger than the lead angle of the thread portion 12a and the thread portion 32b, the protruding portion 23e can be brought into contact with the protrusion 31e without being brought into contact with the lower surface 31b.

When the case 10 and the filter element 20 are further screwed into the head 30, the filter element 20 rotates with respect to the case 10 because the protruding portion 23e is in contact with the protrusion 31e, and the case 10 rotates clockwise. Meanwhile, the filter element 20 is pushed up toward the head 30 without rotating (see the arrow in FIG. 9). As a result, the protruding portion 23e is inserted into the recessed portion 31d along the protrusion 31e.

When the screwing of the thread portion 12a and the thread portion 32b is completed and the case 10 and the head 30 are assembled, as illustrated in FIG. 2 to FIG. 4, the protruding portion 23e is inserted in the recessed portion 31d, and the antenna 41 and the IC tag 25 face each other.

According to the present embodiment, even in the filter device 1 in which the filter element 20 needs to be inserted into the case 10 before the case 10 is attached to the head 30 and the filter element 20 cannot be positioned with respect to the head 30 at the time of insertion of the filter element 20, the filter element 20 can be positioned in the circumferential direction. In particular, the positioning can be performed only by assembling the head 30 and the case 10 in which the filter element 20 is inserted, and thus the positioning is smoothly performed.

While the protruding portion 23e has two upper end faces 23f and the upper end of the protruding portion 23e has a triangular shape in side view in the present embodiment, the shape of the upper end of the protruding portion 23e is not limited to this. For example, the upper end of the protruding portion 23e may be a flat surface, and the protruding portion 23e may have a rectangular shape in side view. In addition, for example, the two upper end faces 23f may be separated from each other, and the upper end of the protruding portion 23e may have a trapezoidal shape in side view. Still, the protruding portion 23e preferably does not have a flat surface at the upper end, in order to avoid a problem caused by a surface (flat surface) parallel to the upper surface 23d coming into contact with the protrusion 31e at the upper end of the protruding portion 23e. Furthermore, the upper end face of the protruding portion 23e may have one inclined surface (only the inclined surface on the right side in FIG. 5(C)).

While the inclination angle of the upper end face 23f is equal to or larger than the lead angle of the thread portion 12a and the thread portion 32b in the present embodiment, the inclination angle of the upper end face 23f is not limited to this. Still, to prevent contact between the protruding portion 23e and the lower surface 31b, the inclination angle of the upper end face 23f is preferably equal to or larger than the lead angle of the thread portion 12a and the thread portion 32b.

While the height difference d1 between the leading end 31f and the lower surface 31b is equal to or greater than the pitch of the thread portion 12a and the thread portion 32b in the present embodiment, the protrusion amount of the protrusion 31e with respect to the lower surface 31b is not limited to this. Still, to reliably bring the protruding portion 23e into contact with the protrusion 31e, the protrusion amount of the protrusion 31e with respect to the lower surface 31b is preferably equal to or larger than the pitch of the thread portion 12a and the thread portion 32b.

While the recessed portion 31d has a rectangular shape as viewed along the central axis ax in the present embodiment, the shape of the recessed portion 31d is not limited to this. For example, the shape of the recessed portion 31d as viewed along the central axis ax may be a partial annular shape.

Further, while the longitudinal direction of the protruding portion 23e is oriented along the line L2 as viewed along the central axis ax in the present embodiment, the orientation of the longitudinal direction of the protruding portion 23e is not limited to this. For example, as illustrated in FIG. 5(B), the longitudinal direction of the protruding portion 23e may be oriented along a circle L3 that is centered on the central axis ax and passes through a point C.

While the IC tag 25 is provided at the protruding portion 23e in the present embodiment, the IC tag 25 may be provided at a position other than the protruding portion 23e. Since the filter element 20 is positioned in the circumferential direction by the protruding portion 23e and the recessed portion 31d, the antenna 41 may be provided on the head 30 to make the antenna 41 disposed adjacent to the IC tag 25 when the screwing of the thread portion 12a and the thread portion 32b is completed.

Second Embodiment

In the first embodiment of the present invention, the IC tag 25 is provided along the z direction, but the arrangement of the IC tag 25 is not limited to this. In a filter device 2 according to a second embodiment of the present invention, the IC tag 25 is provided along xy directions. The filter device 2 will be described below. Note that the same components as those in the filter device 1 are denoted by the same reference numerals, and descriptions thereof will be omitted.

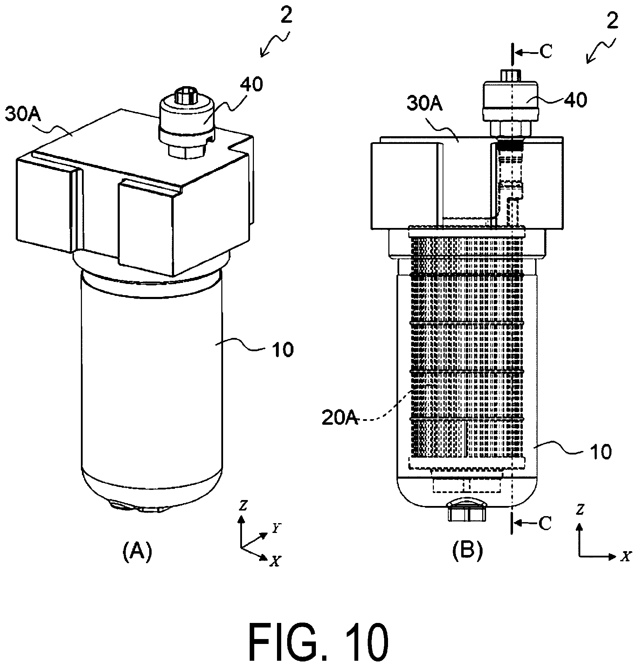

FIG. 10 is diagram schematically illustrating the filter device 2 that is an embodiment of the present invention, in which (A) is a perspective view, and (B) is a right side view. The filter device 2 mainly includes the case 10, a filter element 20A, and a head 30A. In a state where the case 10 is attached to the head 30A, the filter element 20A is provided to the case 10 and the head 30A.

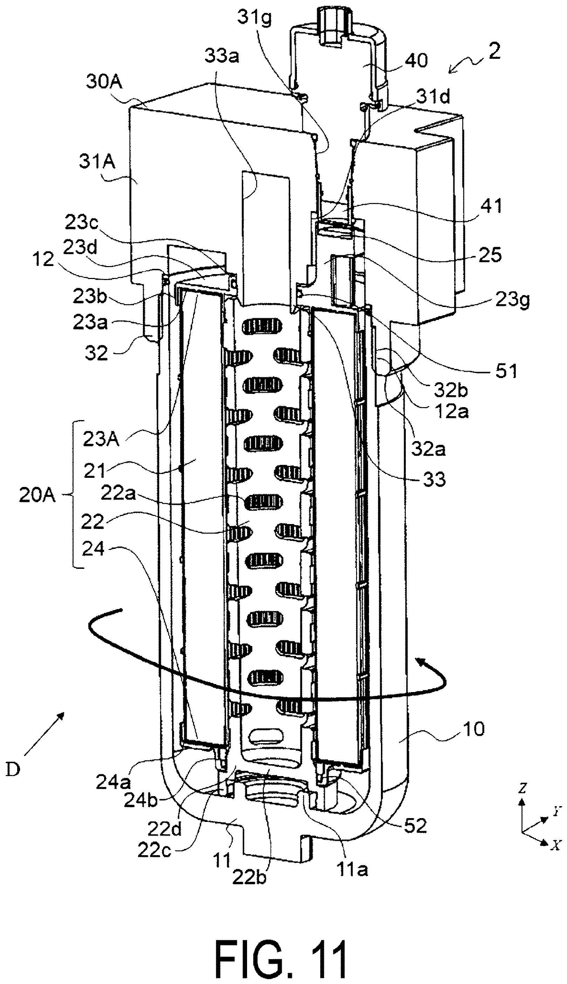

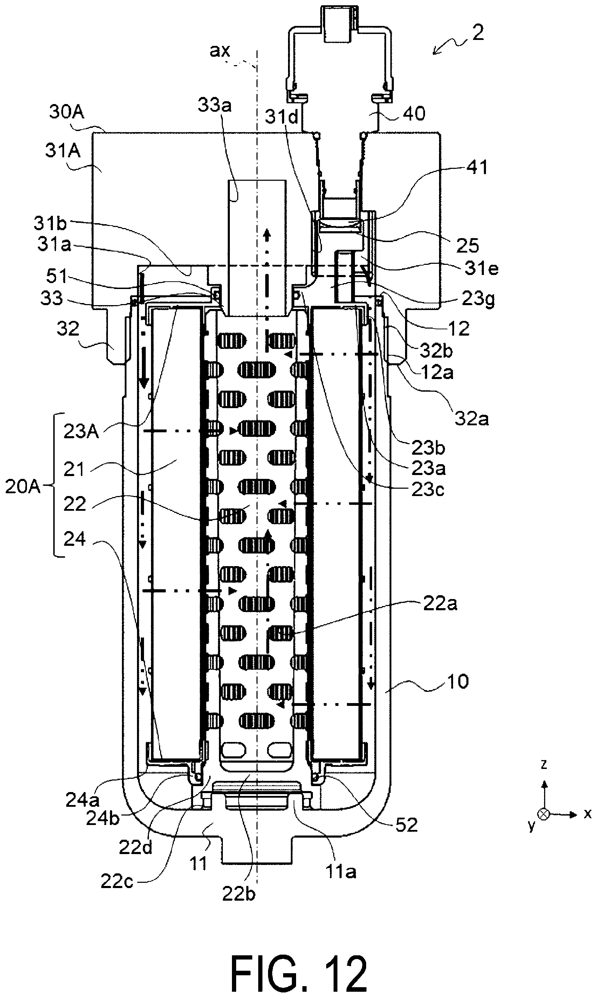

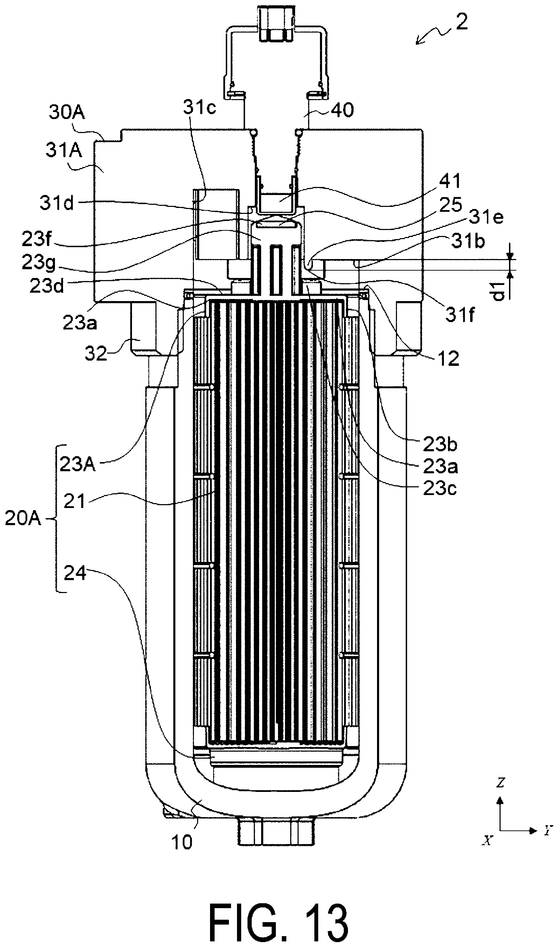

FIG. 11 is a perspective view obtained by cutting the object in FIG. 10(A) along a plane parallel to the xz plane including the central axis ax. FIG. 12 is a diagram of the object in FIG. 11 as viewed in a direction indicated by an arrow D. FIG. 13 is a cross-sectional view taken along line C-C in FIG. 10(B). In FIG. 11 to FIG. 13, hatching for indicating a cross section is omitted. The dash-dotted line arrows in FIG. 12 indicate a flow of the oil.

The filter element 20A is a member having a bottomed substantially tubular shape and provided inside the case 10. The filter element 20A mainly includes the filtration section 21, the inner tube 22, an upper plate 23A, and the lower plate 24.

The upper plate 23A is provided at the upper side end of the filtration section 21. The upper plate 23A mainly includes the plate-like portion 23a, the recessed portion 23b, the tubular portion 23c, and a plate-like protruding portion 23g (corresponding to first rotation stop portion of the present invention) provided on the upper side of the plate-like portion 23a. The protruding portion 23g has a columnar shape, protrudes toward the head 30, and is provided on the upper surface 23d.

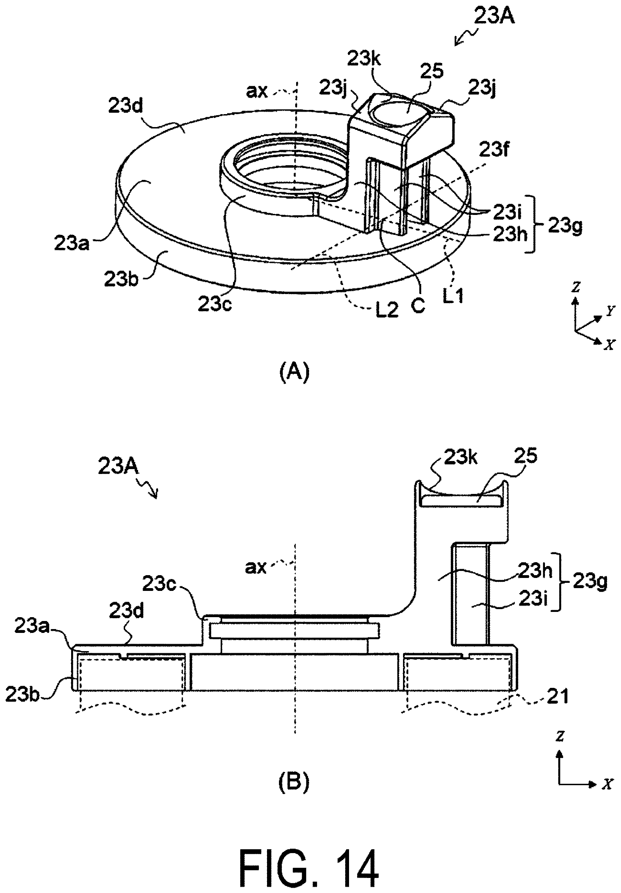

FIG. 14 is a diagram schematically illustrating the upper plate 23A, in which (A) is a perspective view and (B) is a cross-sectional view. In FIG. 14, hatching indicating a cross section is omitted. The protruding portion 23g is provided at a position overlapping the filtration section 21 as viewed along the central axis ax of the case 10 and the filter element 20. The protruding portion 23g includes a body portion 23h and a reinforcing rib 23i, but the shape and the structure of the protruding portion 23g are not limited to this.

The longitudinal direction of the protruding portion 23g is oriented along the line L2 orthogonal to the line L1. The protruding portion 23e has an upper end face 23j inclined to be lowered toward an end in the y direction. An inclination angle of the upper end face 23j is equal to or larger than a lead angle of the thread portion 12a and a thread portion 32b.

On an upper side (+z side) surface of the protruding portion 23g, the IC tag 25 is provided along the xy directions. The upper end of the body portion 23h has a notch portion 23k notched in a recessed shape in the center portion, and the IC tag 25 is provided inside the notch portion 23k. Thus, the IC tag 25 can be provided near the upper end of the protruding portion 23g while leaving the upper end face 23j. While the IC tag 25 is exposed in the present embodiment, the IC tag 25 may be embedded in the protruding portion 23g.

The description will now return to FIG. 11 to FIG. 13. The head 30A is provided to the case 10 to cover the opening portion 12 at the upper end of the case 10. The head 30 mainly includes a head body portion 31A, the tubular portion 32, and the connecting tube 33.

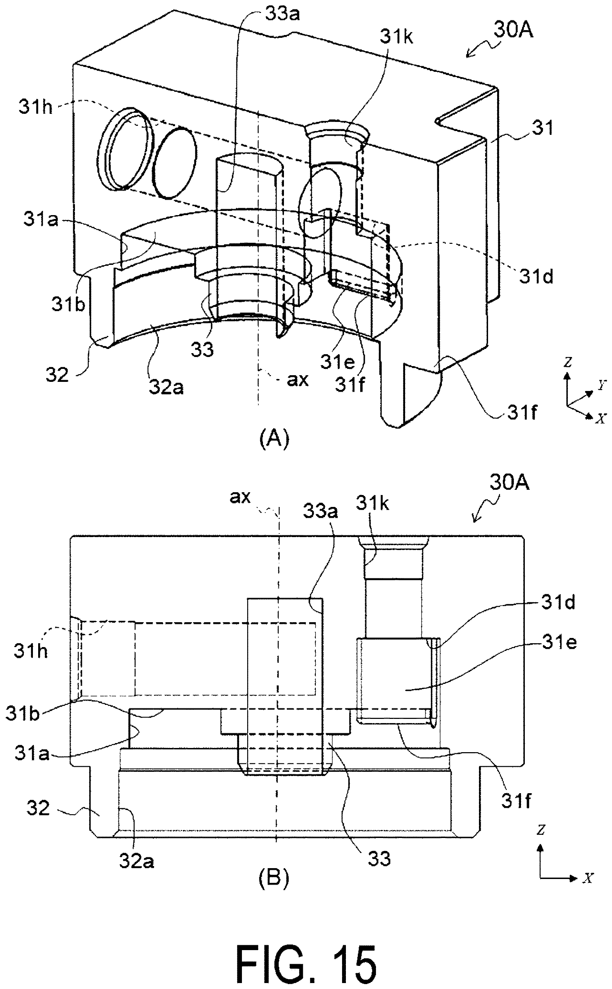

FIG. 15 is a diagram schematically illustrating the head 30A, in which (A) is a cross-sectional perspective view, and (B) is a cross-sectional view. In FIG. 15, hatching for indicating a cross section is omitted. The head body portion 31A includes the recessed portion 31a, the recessed portion 31d, the protrusion 31e, the inflow port 31i, and the outflow port 31h. The head body portion 31A has a hole 31g with one end open in the recessed portion 31d. The insertion member 40 is inserted in the hole 31g.

The description will now return to FIG. 11 to FIG. 13. In a state where the case 10 and the head 30A are assembled, the protruding portion 23g is inserted in the recessed portion 31d. Therefore, the antenna 41 and the IC tag 25 are arranged adjacent to each other.

Next, functions of the filter device 2 configured as described above will be described. When the thread portion 12a and the thread portion 32b are screwed to each other and the case 10 or the head 30A is rotated, the case 10 and the filter element 20A are rotated clockwise (see an arrow in FIG. 11) with respect to the head 30A. In a state where the thread portion 12a and the thread portion 32b are not completely screwed, the protruding portion 23g is not in contact with the head 30A. Thus, the case 10 and the filter element 20A both rotate clockwise.

The leading end 31f of the protrusion 31e is located more on the -z side (upper plate 23 side) than the lower surface 31b. Thus, when the case 10 and the filter element 20A are screwed into the head 30A in this state, the protruding portion 23g comes into contact with the protrusion 31e. Since the inclination angle of the upper end face 23j is equal to or larger than the lead angle of the thread portion 12a and the thread portion 32b, the protruding portion 23g can be brought into contact with the protrusion 31e without coming into contact with the lower surface 31b.

When the case 10 and the filter element 20A are further screwed into the head 30A with the protruding portion 23g being in contact with the protrusion 31e, the filter element 20A rotates with respect to the case 10, and the case 10 rotates clockwise. Meanwhile, the filter element 20A is pushed up toward the head 30A without rotating. As a result, the protruding portion 23g is inserted into the recessed portion 31d along the protrusion 31e. When the screwing of the thread portion 12a and the thread portion 32b is completed and the case 10 and the head 30A are assembled, the protruding portion 23g is inserted into the recessed portion 31d, and the antenna 41 and the IC tag 25 face each other.

According to the present embodiment, even in the filter device 2 in which the filter element 20A needs to be inserted into the case 10 before the case 10 is attached to the head 30A and the filter element 20A cannot be positioned in the circumferential direction with respect to the head 30A at the time of insertion of the filter element 20A, the filter element 20A can be positioned in the circumferential direction. In particular, the positioning can be performed only by assembling the head 30A and the case 10 into which the filter element 20A is inserted, and thus the positioning is smoothly performed.

Third Embodiment

In the first embodiment of the present invention, the filter element 20 is positioned by inserting the protruding portion 23e of the upper plate 23 into the recessed portion 31d of the head body portion 31, but the protruding portion and the recessed portion may be swapped. In a filter device 3 according to a third embodiment of the present invention, the upper plate is provided with the recessed portion, and the head body portion is provided with the protruding portion. The filter device 3 will be described below. Note that the same components as those in the filter device 1 are denoted by the same reference numerals, and descriptions thereof will be omitted.

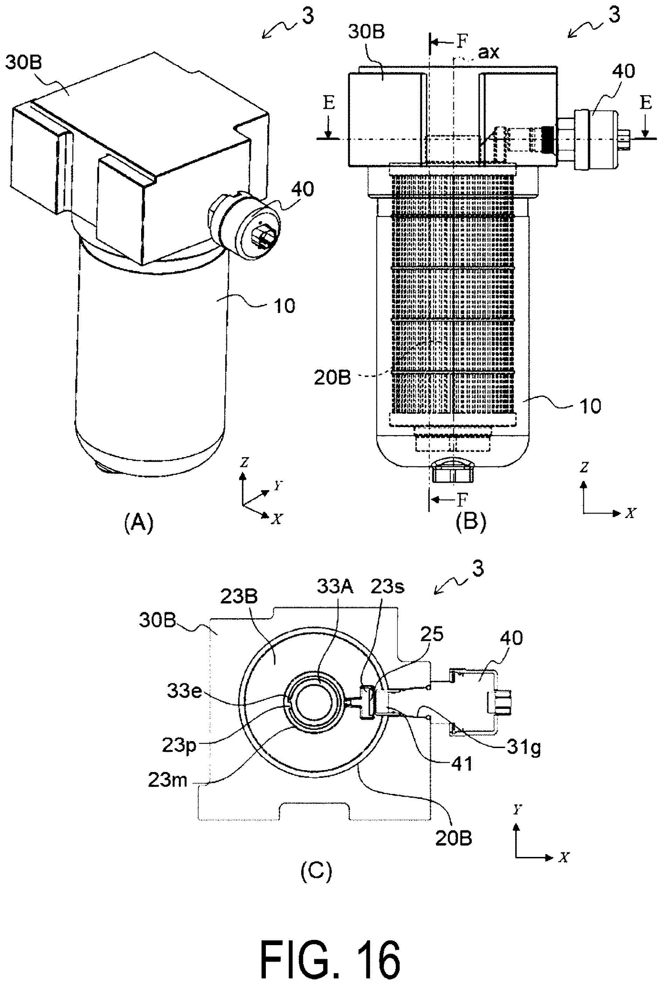

FIG. 16 is diagram schematically illustrating the filter device 3 that is an embodiment of the present invention, in which (A) is a perspective view, (B) is a right side view, and (C) is a cross-sectional view taken along line E-E in (B). The filter device 3 mainly includes the case 10, a filter element 20B, and a head 30B. In a state where the case 10 is attached to the head 30B, the filter element 20B is provided to the case 10 and the head 30B.

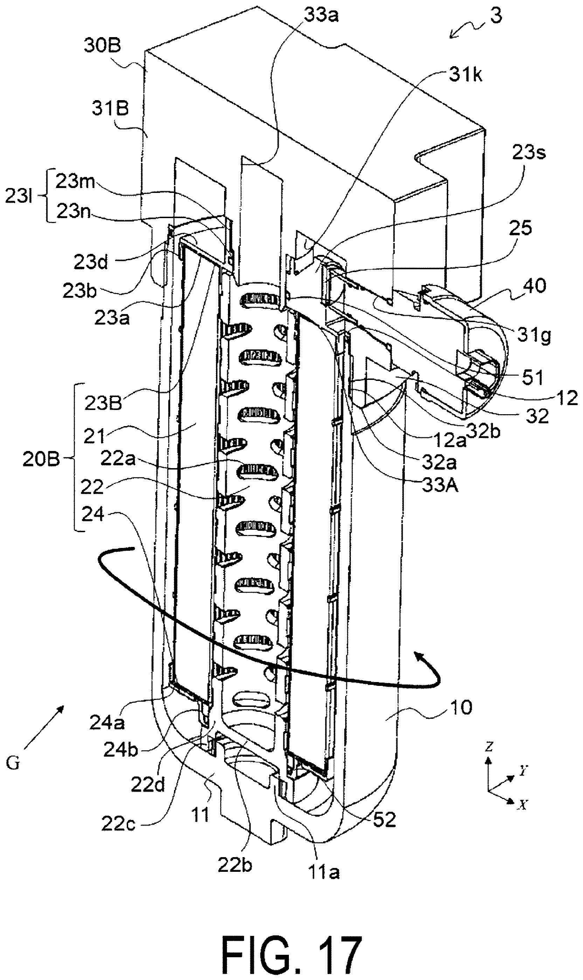

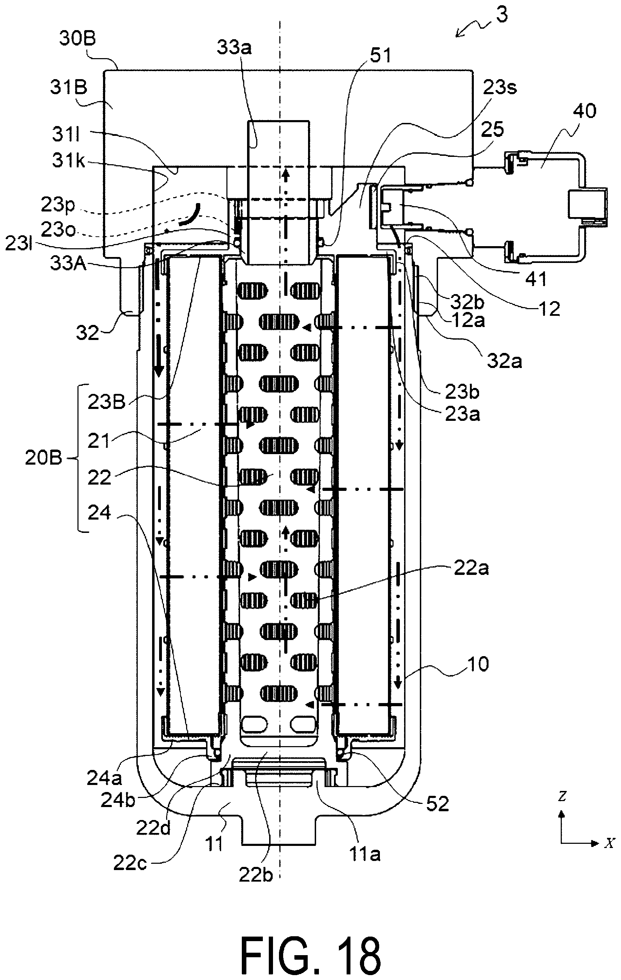

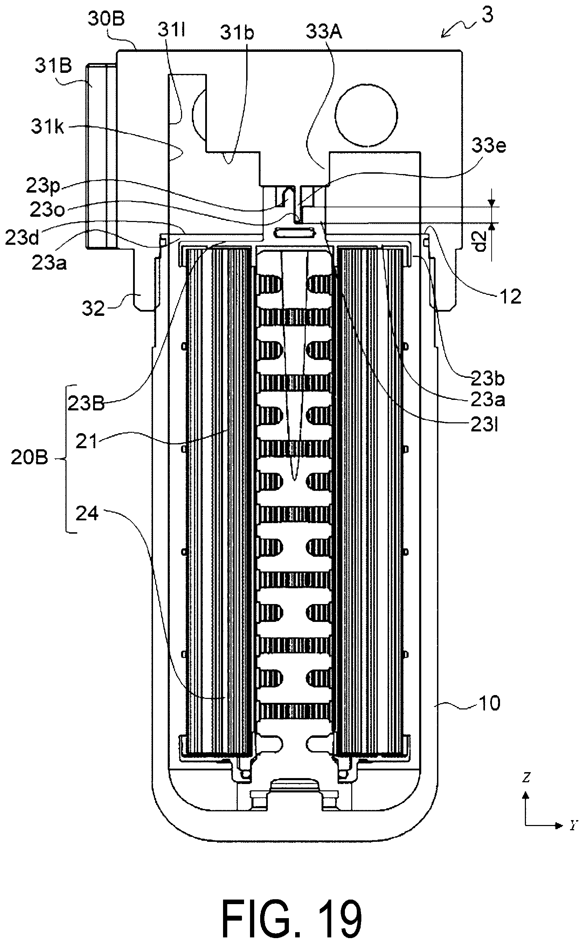

FIG. 17 is a perspective view obtained by cutting the object in FIG. 16(A) along a plane parallel to the xz plane including the central axis ax. FIG. 18 is a diagram of the object in FIG. 17 as viewed in a direction indicated by an arrow G. FIG. 19 is a cross-sectional view taken along line F-F in FIG. 16(B). In FIG. 17 to FIG. 19, hatching for indicating a cross section is omitted. The dash-dotted line arrows in FIG. 18 indicate a flow of the oil.

The filter element 20B is a member having a bottomed substantially tubular shape and provided inside the case 10. The filter element 20B mainly includes the filtration section 21, the inner tube 22, an upper plate 23B, and the lower plate 24.

The upper plate 23B mainly includes the plate-like portion 23a, the recessed portion 23b, a protruding portion 23s, and a tubular portion 23l that has a tubular shape and is provided on the upper surface 23d to protrude in the +z direction.

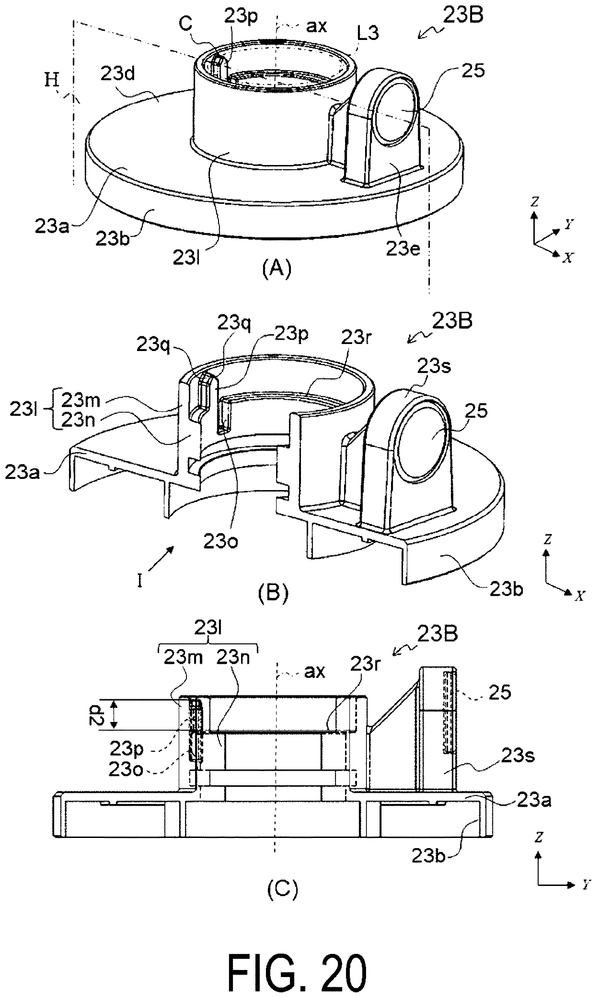

FIG. 20 is a diagram schematically illustrating the upper plate 23A, in which (A) is a perspective view, (B) is a cross-sectional view on a plane H in (A), and (C) is a diagram as viewed in a direction indicated by an arrow I in (B). In FIG. 20, hatching for indicating a cross section is omitted. The tubular portion 23l mainly includes a tubular portion 23m and a tubular portion 23n provided in a band shape along an inner circumferential surface of the tubular portion 23m. The tubular portion 23n includes a recessed portion 23o recessed toward the filtration section 21 (in the -z direction), and a protrusion 23p that protrudes in the +z direction toward an upper surface 23r facing the head 30B (in a direction opposite to the depth direction of the recessed portion 23o). The protrusion 23p is provided along a wall surface of part of the recessed portion 23o. The recessed portion 23o and the protrusion 23p are provided along the tubular portion 23m. The tubular portion 23n, the recessed portion 23o, and the protrusion 23p correspond to the first rotation stop portion of the present invention.

As viewed along the central axis ax, the longitudinal direction (corresponding to second direction of the present invention) of the protrusion 23p is oriented along the circle L3 that is centered on the central axis ax and passes through the center C of the protrusion 23p in the longitudinal direction. A protrusion amount d2 of the protrusion 23p is equal to or larger than the pitch of the thread portion 12a and the thread portion 32b. An upper end face 23q of the protrusion 23p is inclined to be lowered toward the outer side in the circumferential direction. An inclination angle of the upper end face 23q is preferably equal to or larger than a lead angle of the thread portion 12a and the thread portion 32b.

The description will now return to FIG. 17 to FIG. 19. The head 30B is provided to the case 10 to cover the opening portion 12 at the upper end of the case 10. The head 30B mainly includes a head body portion 31B, the tubular portion 32, and a connecting tube 33A that is provided at substantially the center of the head body portion 31 to protrude in the -z direction.

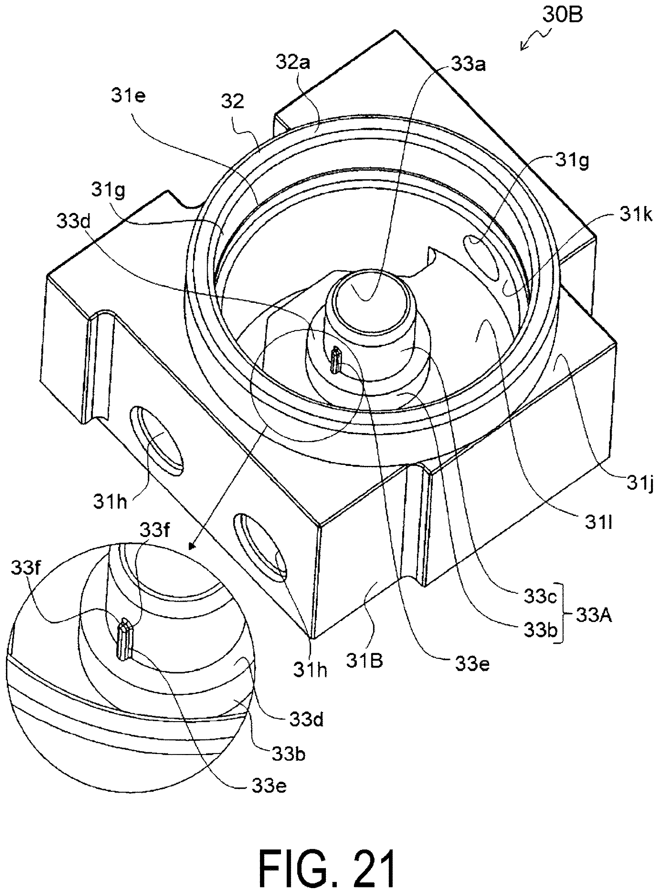

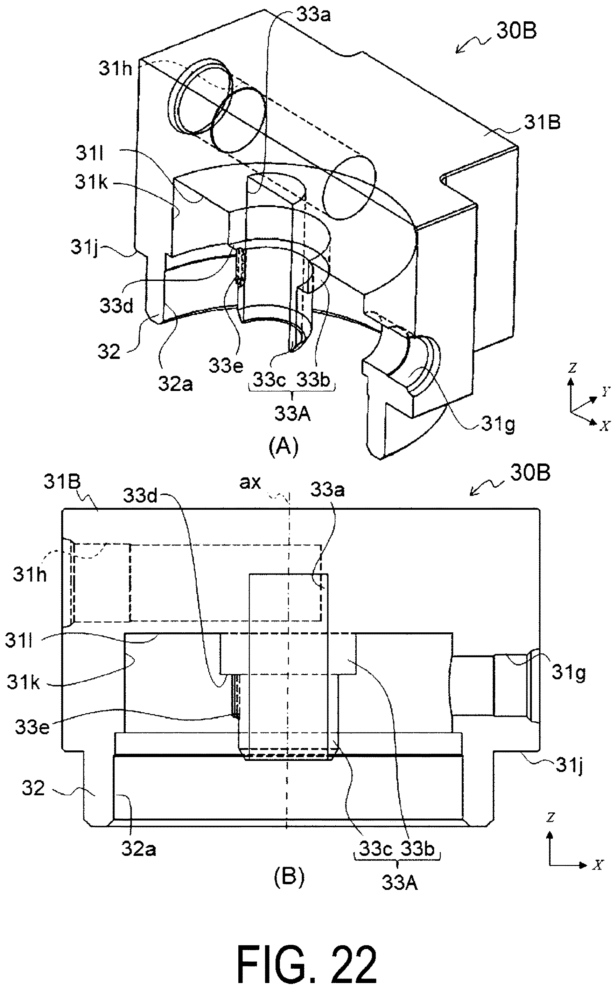

FIG. 21 is a perspective view schematically illustrating the head 30B as viewed from the -z side. FIG. 22 is a diagram schematically illustrating the head 30B, in which (A) is a cross-sectional perspective view, and (B) is a cross-sectional view. In FIG. 22, hatching for indicating a cross section is omitted.

The head body portion 31B includes a recessed portion 31k provided to be recessed in the +z direction from the bottom surface 31j, the inflow port 31i, the outflow port 31h, and the hole 31g. The oil that has flowed in through the inflow port 31i flows into the case 10 through a recessed portion 31k.

The recessed portion 31a has a lower surface 311 provided with the connecting tube 33A. The connecting tube 33A includes tubular portions 33b and 33c protruding in the -z direction from the lower surface 311. The tubular portion 33b is provided outside the tubular portion 33c, and has a lower height than the tubular portion 33c. A protruding portion 33e (corresponding to second rotation stop portion of the present invention) that protrudes toward the upper plate 23B is provided on a lower surface 33d facing the leading end face of the tubular portion 33b, that is, the filter element 20B (upper plate 23B).

The protruding portion 33e is provided along the tubular portion 33c. An upper end face 33f of the protruding portion 33e is inclined to be lowered toward the outer side in the circumferential direction. The inclination angle of the upper end face 33f is preferably equal to or larger than the lead angle of the thread portion 12a and the thread portion 32b.

Next, the description will now return to FIG. 17 to FIG. 19, and functions of the filter device 3 configured as described above will be described. When the thread portion 12a and the thread portion 32b are screwed to each other and the case 10 or the head 30B is rotated, the case 10 and the filter element 20B are rotated clockwise (see an arrow in FIG. 17) with respect to the head 30B. In a state where the screwing of the thread portion 12a and the thread portion 32b is not completed, since the protruding portion 33e is not in contact with the filter element 20B (upper plate 23B), the case 10 and the filter element 20B rotate together in the clockwise direction.

When the case 10 and the filter element 20A are screwed into the head 30A in this state, the protruding portion 33e comes into contact with the protrusion 23p. Since the protrusion amount d2 of the protrusion 23p is equal to or larger than the pitch of the thread portion 12a and the thread portion 32b, the protruding portion 33e can be brought into contact with the protrusion 23p without coming contact with the lower surface 31b. Since the upper end face 23q is inclined, when the case 10 and the filter element 20B are rotated with respect to the head 30B, the filter element 20B rotates with respect to the case 10 while the upper end face 23q slides with respect to the protruding portion 33e. Thus, defects such as damaging of the filter element 20B inside the case 10 can be prevented.

When the case 10 and the filter element 20B are further screwed into the head 30B with the protruding portion 33e being in contact with the protrusion 23p, the filter element 20B rotates with respect to the case 10, and the case 10 rotates clockwise. Meanwhile, the filter element 20B is pushed up toward the head 30B without rotating. As a result, the protruding portion 33e is inserted into the recessed portion 23o along the protrusion 23p. When the screwing of the thread portion 12a and the thread portion 32b is completed, the protruding portion 33e is inserted into the recessed portion 23o.

Since the filter element 20B is positioned in the circumferential direction by inserting the protruding portion 33e into the recessed portion 23o, the IC tag 25 provided to the protruding portion 23s and the antenna 41 provided to the head 30B face each other.

According to the present embodiment, even in the filter device 3 in which the filter element 20B needs to be inserted into the case 10 before the case 10 is attached to the head 30B and the filter element 20B cannot be positioned in the circumferential direction with respect to the head 30B at the time of insertion of the filter element 20B, the filter element 20B can be positioned in the circumferential direction. In particular, the positioning can be performed only by assembling the head 30B and the case 10 in which the filter element 20B is inserted, and thus the positioning is smoothly performed.

While the protruding portion 33e, the recessed portion 23o, and the protrusion 23p do not overlap the filtration section 21 as viewed along the central axis in the present embodiment, the protruding portion 33e, the recessed portion 23o, and the protrusion 23p may overlap the filtration section 21. For example, the recessed portion 23o and the protrusion 23p may be provided on the outer circumferential surface of the tubular portion 23m, and the head body portion 31B may be provided with a protruding portion.

While the protrusion 23p has a rod shape in the present embodiment, the shape of the protrusion 23p is not limited to this, and may be, for example, a plate-like shape. Similarly, while the protruding portion 33e has a rod shape in the present embodiment, the shape of the protruding portion 33e is not limited to this. While the longitudinal direction of the protrusion 23p is oriented along the circle L3 in the present embodiment, the longitudinal direction of the protruding portion 23g may be oriented along the line L2 orthogonal to the line L1. While the protruding portion 33e has a rod shape in the present embodiment, the shape of the protruding portion 33e is not limited to this.

The embodiments of the invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. In addition, addition, deletion, replacement or the like of other configurations can be made on the configurations of the embodiments.

In addition, the term "substantially" is not to be understood as merely being strictly the same, and is a concept that includes errors and modifications to an extent that does not result in loss in identity. For example, the "substantially cylindrical shape" is a concept that includes a case where, for example, the shape can be placed in the same category as the cylindrical shape, and is not strictly limited to the cylindrical shape. Further, simple expressions such as orthogonal, parallel, and identical are not to be understood as merely being strictly, for example, orthogonal, parallel, and identical, and include being, for example, substantially parallel, substantially orthogonal, and substantially identical.

In addition, the term "vicinity" means to include a range of regions (which can be determined as desired) near a position serving as a reference. For example, the term "a vicinity of an end" refers to a range of regions in the vicinity of the end, and is a concept indicating that the end may or need not be included.

Reference Signs List

1, 2, 3: Filter device
10: Case
11: Bottom surface
11a: Protruding portion
12: Opening portion
12a: Thread portion
20, 20A, 20B: Filter element
21: Filtration section
22: Inner tube
22a: Hole
22b: Bottom surface
22c: Tubular portion
22d: Tubular portion
23, 23A, 23B: Upper plate
23a: Plate-like portion
23b: Recessed portion
23c: Tubular portion
23d: Upper surface
23e, 23g, 23s: Protruding portion
23f, 23j: Upper end face
23h: Body portion
23i: Rib
23k: Notch portion
23l: Tubular portion
23m, 23n: Tubular portion
23o: Recessed portion
23p: Protrusion
23q: Upper end face
23r: Upper surface
24: Lower plate
24a: Recessed portion
24b: Tubular portion
25: IC tag
30, 30A, 30B: Head
31, 31A, 31B: Head body portion
31a, 31k: Recessed portion
31b, 31l: Lower surface
31c, 31d: Recessed portion
31e: Protrusion
31f: Leading end
31g: Hole
31h: Outflow port
31i: Inflow port
31j: Bottom surface
32: Tubular portion
32a: Opening portion
32b: Thread portion
33, 33A: Connecting tube
33a: Hollow portion
33b, 33c: Tubular portion
33d: lower surface
33e: Protruding portion

33f: Upper end face
40: Insertion member
41: Antenna
51, 52: Elastic member

## Claims

1. A filter device comprising:

   a case that has a bottomed substantially tubular shape, has an upper end provided with an opening, and has a first thread portion formed near the opening;
   a filter element that is provided in the case to be rotatable with respect to the case, and includes a cylindrical filtration section, and an upper plate provided at an upper end of the filtration section; and
   a head that includes a second thread portion capable of being screwed to the first thread portion, and is provided to the case, to cover the upper end of the case when the second thread portion and the first thread portion are screwed, wherein
   the upper plate includes a first rotation stop portion on an upper surface that faces the head,
   the head includes a second rotation stop portion on a lower surface that faces the upper plate,
   one of the first rotation stop portion and the second rotation stop portion is a protruding portion and another one of the first rotation stop portion and the second rotation stop portion is a recessed portion and a protrusion,
   the protrusion is provided along a wall surface at part of the recessed portion, to protrude in a direction opposite to a depth direction of the recessed portion,
   in response to rotation of the case or the head and screwing of the first thread portion and the second thread portion, the filter element rotates when the protruding portion is not in contact with the protrusion, and does not rotate when the protruding portion is in contact with the protrusion, and
   in a state where the case and the head are assembled, the protruding portion is inserted in the recessed portion.

2. The filter device according to claim 1, wherein a protrusion amount of the protrusion is equal to or larger than a pitch of the first thread portion and the second thread portion.

3. The filter device according to claim 1 or 2, wherein

   the first rotation stop portion is the protruding portion and protrudes toward the head,

the second rotation stop portion is the recessed portion and the protrusion,

as viewed along a central axis of the filter element and the case, a first direction that is a longitudinal direction of the protruding portion extends along a line orthogonal to a line in a radial direction passing through a center in the first direction, or along a circle centered on the central axis and passing through the center in the first direction, and

an upper end face of the protruding portion is inclined to be lower toward an end in the first direction.

4. The filter device according to claim 3, wherein the protruding portion is provided at a position overlapping the filtration section.

5. The filter device according to claim 1 or 2, wherein

   the first rotation stop portion is the recessed portion and the protrusion,

   the second rotation stop portion is the protruding portion and protrudes toward the upper plate,

   as viewed along a central axis of the filter element and the case, a second direction that is a longitudinal direction of the protrusion extends along a line orthogonal to a line in a radial direction passing through a center in the second direction, or along a circle centered on the central axis and passing through the center in the second direction, and

   an upper end face of the protrusion is inclined to be lower toward an end in the second direction.

6. The filter device according to any one of claims 3 to 5, wherein an inclination angle of the upper end face is equal to or larger than a lead angle of the first thread portion and the second thread portion.

7. The filter device according to claim 3 or 4, wherein

   the protruding portion is provided with an IC tag, and

   the head is provided with an antenna adjacent to the recessed portion.

**FIG. 1**

EP 4 470 649 A1

# FIG. 2

13

FIG. 3

FIG. 4

(A)

(B)

(C)

# FIG. 5

**FIG. 6**

(A)

(B)

# FIG. 7

FIG. 8

FIG. 9

FIG. 10

FIG. 11

FIG. 12

FIG. 13

(A)

(B)

FIG. 14

(A)

(B)

# FIG. 15

(A)

(B)

(C)

FIG. 16

FIG. 17

FIG. 18

FIG. 19

# FIG. 20

FIG. 21

FIG. 22

# INTERNATIONAL SEARCH REPORT

International application No.

**PCT/JP2022/047970**

### A. CLASSIFICATION OF SUBJECT MATTER

***B01D 35/14***(2006.01)i; ***B01D 29/11***(2006.01)i
FI:   B01D35/14; B01D29/10 501A; B01D29/10 510C

According to International Patent Classification (IPC) or to both national classification and IPC

### B. FIELDS SEARCHED

Minimum documentation searched (classification system followed by classification symbols)
B01D24/00-35/04;35/08-37/08, F01M11/03

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-506842 A (MAHLE INTERNATIONAL GMBH) 03 March 2011 (2011-03-03) entire text, all drawings | 1-7 |
| A | JP 2020-517450 A (RT-FILTERTECHNIK GMBH) 18 June 2020 (2020-06-18) entire text, all drawings | 1-7 |
| A | JP 2005-349336 A (YAMASHIN-FILTER CORP) 22 December 2005 (2005-12-22) entire text, all drawings | 1-7 |
| A | JP 2000-279711 A (TOYO ROKI MFG CO LTD) 10 October 2000 (2000-10-10) entire text, all drawings | 1-7 |
| A | JP 2008-540914 A (MANN+HUMMEL GMBH) 20 November 2008 (2008-11-20) entire text, all drawings | 1-7 |
| A | JP 2019-115879 A (YAMASHIN FILTER CORP) 18 July 2019 (2019-07-18) entire text, all drawings | 7 |

☐ Further documents are listed in the continuation of Box C.   ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/047970**

| Patent document cited in search report | | | Publication date (day/month/year) | Patent family member(s) | | | Publication date (day/month/year) |
|---|---|---|---|---|---|---|---|
| JP | 2011-506842 | A | 03 March 2011 | US | 2011/0089091 | A1 | |
| | | | | entire text, all drawings | | | |
| | | | | WO | 2009/080455 | A1 | |
| | | | | DE | 102007062102 | A1 | |
| | | | | KR | 10-2010-0098427 | A | |
| | | | | CN | 101903078 | A | |
| JP | 2020-517450 | A | 18 June 2020 | US | 2020/0188820 | A1 | |
| | | | | entire text, all drawings | | | |
| | | | | WO | 2018/197149 | A1 | |
| | | | | DE | 102017004174 | A1 | |
| JP | 2005-349336 | A | 22 December 2005 | (Family: none) | | | |
| JP | 2000-279711 | A | 10 October 2000 | (Family: none) | | | |
| JP | 2008-540914 | A | 20 November 2008 | US | 2009/0127170 | A1 | |
| | | | | entire text, all drawings | | | |
| | | | | WO | 2006/120242 | A2 | |
| | | | | DE | 202005007869 | U1 | |
| | | | | CN | 101198389 | A | |
| JP | 2019-115879 | A | 18 July 2019 | US | 2020/0298148 | A1 | |
| | | | | entire text, all drawings | | | |
| | | | | WO | 2019/131263 | A1 | |
| | | | | EP | 3733259 | A1 | |
| | | | | CN | 111372667 | A | |
| | | | | KR | 10-2020-0096218 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019115879 A